# EUROPEAN PATENT APPLICATION

(11) **EP 1 550 584 A2**
(43) Date of publication of application: **06.07.2005**
(21) Application number: 04030896.7
(22) Date of filing: 28.12.2004
(51) Int. Cl.: B60R 11/02

(54) **Apparatus and method for implementing power saving mode of telematics terminal**

(30) Priority: 29.12.2003 KR 2003099268
(71) Applicant: LG ELECTRONICS INC., Seoul (KR)
(72) Inventor: Kim, Hyong-Kyun, Gangnam-Gu, Seoul (KR)
(74) Representative: von Hellfeld, Axel, Dr. Dipl.-Phys.

(57) **Abstract**

An apparatus and method for implementing a power saving mode of a telematics terminal is disclosed. The apparatus for implementing a power saving mode of a telematics terminal includes a control unit turned off when the ignition of a transportation means having a telematics terminal therein is turned off; a modem for mobile communication for receiving time information from a base station and periodically operating in a reception standby state or a power saving mode according to real time information; a clock oscillator for driving a timer which calculates the real time information; and a signal combining unit for combining a signal applied from a communication interface unit with a power control signal applied from the modem for mobile communication to control a main system power supply unit.

## Description

### BACKGROUND OF THE INVENTION

### 1. Field of the Invention

The present invention relates to an apparatus and method for implementing a power saving mode of a telematics terminal, and particularly, to an apparatus and method for implementing a power saving mode of a telematics terminal operated in a power saving mode capable of minimizing battery consumption when the ignition of a car is turned off.

### 2. Description of the Related Art

"Telematics", a compound word made up of the words "telecommunication" and "informatics", and is receiving much attention in the field of Information technology (IT). Telematics refers to a radio (wireless) data service which can provide information while a transportation means (vehicle) is moving, and particularly, which can allow a computer provided in a car, an airplane, a ship or the like to exchange information with a base station by using radio communication techniques, a GPS (global position system), a technology for converting specific information into a text signal or a voice signal via the Internet and other related technologies.

Particularly, a telematics service for a car provides a driver with information, such as car accidents, theft detection, driving paths, traffic and living information, games or the like, in real-time by employing a mobile communication technology and a position detecting technology.

For example, the telematics service for a car allows a telematics terminal to be connected to a service center when a car breaks down, allows an e-mail to be received or a road map to be displayed through a computer monitor in the car, and allows passengers to play computer games through a monitor installed for the back seats. Also, because a computer connected to an engine records the status of the main parts of a car, the telematics service can notify a mechanic what part is broken and why anytime.

In addition, a telematics terminal can allow a driver to use the Internet via voice commands while driving and can also allow a car door to be opened through satellite signals when the driver mistakenly locks the door with his car key still in the car.

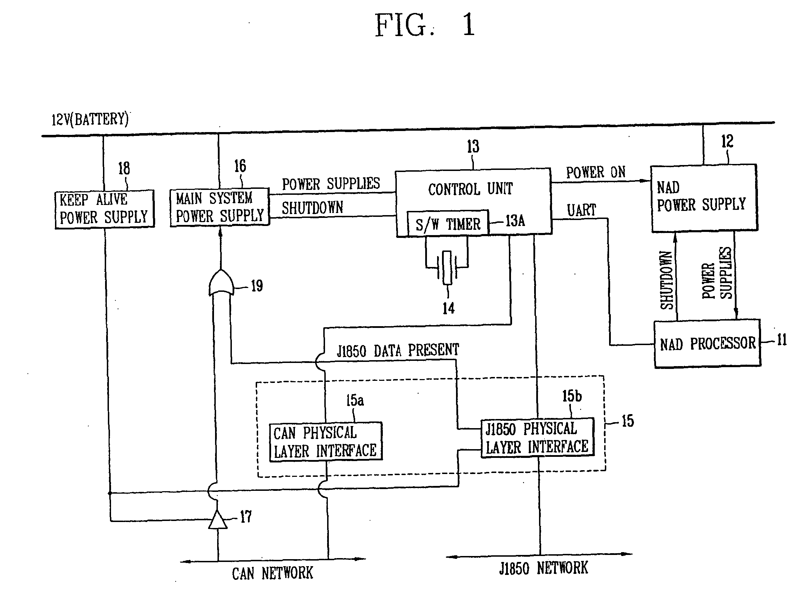

Figure 1 is a block diagram showing the construction of a power saving mode device of a telematics terminal according to the related art.

As shown therein, the power saving mode device includes a NAD (network access device) processor 11 for processing various call signals between a base station and a telematics terminal by using a mobile communication technology, and modulating/demodulating an information signal; a NAD power supply unit 12 for supplying power to the NAD processor 11; a control unit 13 for communicating with a control unit (not shown) provided in a car and with the NAD processor 11 to control the telematics terminal; a clock oscillation unit 14 for providing the control unit 13 and the NAD power supply unit 12 with a reference clock; a communication interface unit 15 for commination between the control unit 13 and the control unit provided in the car; a main system power supply unit 16 for supplying power to a main system including the control unit 13; and a keep alive power supply unit 18 for supplying power to the communication interface unit 15 and an amplifier 17 of a communication signal.

The communication interface unit 15 includes a CAN (controller area network) physical layer interface 15a and a J1850 physical layer interface 15b, and is a CLASS 2 series communication device. The main system power supply unit 16 is controlled by a signal combination unit 19 which combines signals applied from an external communication network (CAN, J1850) to output a control signal.

The telematics terminal should be able to communicate with a base station for a long time with restricted battery power even after the ignition of the car is turned off. Therefore, the telematics terminal operates in a reception standby power saving mode.

In the reception standby power saving mode, the operation is performed in ten minute intervals whereby, a signal is received from a base station for one minute after the ignition of the car is turned off, and the signal is not received from the base station for nine minutes. Such operation is repeatedly performed, thereby restraining power consumption as much as possible and thus extending the life of the battery of the car or other power storage devices, such as the battery of the telematics terminal.

The above operation of the power saving mode device of the telematics terminal will now be briefly explained.

First, the NAD processor 11 receives current time information from a CDMA/PCD base station (not shown) and transmits the received information to the control unit 13.

If the ignition of a car is turned off, a S/W timer 13a in the control unit 13 is driven by the clock oscillation unit 14, and the control unit 13 turns ON/OFF components of the device for implementing a power saving mode, periodically according to the set timing. Namely, in a reception standby state, the control unit 13, the NAD processor 11 and an RF module (not shown) are driven for one minute to receive a signal transmitted from the base station, and for the next nine minutes, only the cores of the NAD processor 11, the RF module (not shown) and the control unit 13 are driven in a power saving mode.

As described above, in the device for implementing a power saving mode of the related art telematics terminal, the control unit, the NAD processor and the RF module operate simultaneously in a reception standby state because the timer is provided in the control unit, which causes a large amount of current to be consumed, and battery capacity of the car is restricted. For this reason, said device for implementing a power saving mode cannot operate for long time, disadvantageously.

### SUMMARY OF THE INVENTION

Therefore, an object of the present invention is to provide an apparatus and method for implementing a power saving mode of a telematics terminal capable of minimizing power consumption in a reception standby state when the telematics terminal mounted in a car is operated in a power saving mode.

To achieve these and other advantages and in accordance with the purpose of the present invention, as embodied and broadly described herein, there is provided an apparatus for implementing a power saving mode of a telematics terminal comprising: a control unit turned off in the reception standby power saving mode; a modem for mobile communication receiving time information from the base station and periodically operating in a reception standby state or a power saving mode according to real-time information; a clock oscillator for driving a timer which calculates real-time information; and a signal combining unit for combining a signal applied from a communication interface unit with a power control signal applied from the modem for mobile communication to control a main system power supply unit

To achieve these and other advantages and in accordance with the purpose of the present invention, as embodied and broadly described herein, there is provided an apparatus for implementing a power saving mode of a telematics terminal comprising: a control unit for controlling a telematics terminal provided in a transportation means and maintaining a power state that is the same as a power state of the transportation means; a modem for mobile communication having a software timer therein, for receiving time information from a base station; a clock oscillator provided with the modem for mobile communication, for driving the software timer; a communication interface unit for allowing communication with another control unit in the transportation means; and a signal combining unit for combining a signal applied from the communication interface unit with a power control signal applied from the modem for mobile communication to control a main system power supply unit.

To achieve these and other advantages and in accordance with the purpose of the present invention, as embodied and broadly described herein, there is provided an apparatus for implementing a power saving mode of a telematics terminal comprising: a control unit for controlling a telematics terminal and maintaining a power state that is the same as a power state of a transportation means; a modem for mobile communication for receiving time information from a base station and periodically changing a mode of the telematics terminal into a reception standby state or a power saving mode; a modem for mobile communication power supply unit having therein an RTC unit which generates a real-time clock, for periodically transmitting real time information of the RTC unit to the modem for mobile communication; a communication interface unit for allowing communication with another control unit in the transportation means; and a signal combining unit for combining a signal applied from the communication interface unit and a power control signal applied from the modem for mobile communication to control a main system power supply unit.

To achieve these and other advantages and in accordance with the purpose of the present invention, as embodied and broadly described herein, there is provided a method for implementing a power saving mode of a telematics terminal comprising: turning off a control unit when a telematics terminal is turned off, and driving a timer upon receiving time information from a base station; and changing a mode of the telematics terminal into a reception standby state or a power saving mode at predetermined intervals.

To achieve these and other advantages and in accordance with the purpose of the present invention, as embodied and broadly described herein, there is provided a method for implementing a power saving mode of a telematics terminal comprising: turning off a control unit when a telematics terminal is turned off; operating a software timer, which is provided in a modem for mobile communication, on the basis of time information received from a base station; maintaining a power saving mode for a first time duration; and maintaining a reception standby state for a second time duration.

To achieve these and other advantages and in accordance with the purpose of the present invention, as embodied and broadly described herein, there is provided a method for implementing a power saving mode of a telematics terminal comprising: a step in which a control unit is turned off when a telematics terminal is turned off; a step in which a modem for mobile communication having received time information from a base station transmits the time information to a modem for mobile communication power supply unit; a step in which the modem for mobile communication power supply unit drives an RTC unit provided therein; and a step in which the modem for mobile communication changes a mode of the telematics terminal into a power saving mode or a reception standby state according to real time information periodically transmitted from the RTC unit.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a unit of this specification, illustrate embodiments of the invention and together with the description serve to explain the principles of the invention.

In the drawings:
Figure 1 is a block diagram showing the construction of an apparatus for implementing a power saving mode of a telematics terminal according to the related art;
Figure 2 is a block diagram showing a first embodiment of an apparatus for implementing a power saving mode of a telematics terminal according to the present invention;
Figure 3 is a flow chart showing a method for implementing a power saving mode of a telematics terminal shown in Figure 2;
Figure 4 is a block diagram showing a second embodiment of an apparatus for implementing a power saving mode of a telematics terminal according to the present invention; and
Figure 5 is a flow chart showing a method for implementing a power saving mode of a telematics terminal shown in Figure 4.

### DETAILED DESCRIPTION OF THE PREFERRED EMBODIMENTS

Reference will now be made in detail to the preferred embodiments of the present invention, examples of which are illustrated in the accompanying drawings.

An apparatus and method for implementing a power saving mode of a telematics terminal according to the present invention minimizes battery consumption in a reception standby state by driving only an NAD processor, a PMIC (power management integrated circuit) and an RF module, using a software implemented timer ("software timer") within the NAD processor modulating/demodulating a signal between the telematics terminai and a base station or to the NAD processor, or using an internal RTC (real time clock) in the PMIC which supplies power to the NAD processor.

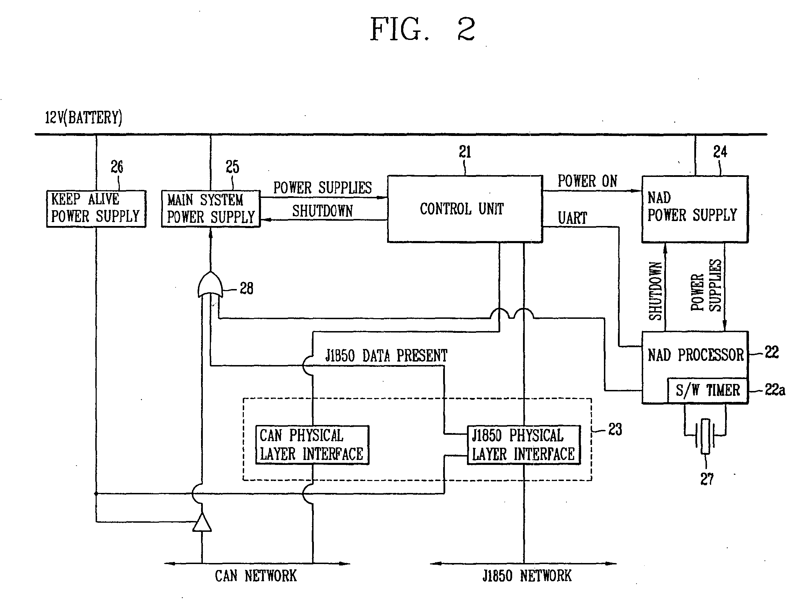

Figure 2 is a block diagram showing a first embodiment of an apparatus for implementing a power saving mode of a telematics terminal according to the present invention.

As shown therein, the apparatus for implementing a power saving mode includes a control unit 21 for controlling a telematics terminal; an NAD processor 22 for processing various calls between the telematics terminal and a base station and modulating/demodulating an information signal; a communication interface unit 23 for allowing communication between the control unit 21 and another control unit (not shown) in a car; power supply units 24, 25 and 26 for respectively supplying power to the NAD processor 22, the control unit 21 and the communication interface unit 23; a clock oscillator 27 for driving of a software timer 22a within the NAD processor 22; and a signal combination unit 28 for combining a signal applied from the communication interface unit 23 with a power control signal applied from the NAD processor 22 to control the main system power supply unit 25.

The NAD processor 22 can be a modem for mobile communication and may be referred to as an MSM (mobile station modem).

The operation of the apparatus for implementing a power saving mode of a telematics terminal constructed as above will now be explained.

When the ignition of a car having the telematics terminal therein is turned off, the control unit 21 is completely turned off, and the NAD processor 22 drives a software timer 22a through time information transmitted from the base station (not shown) and the clock oscillator 27 attached to the NAD processor 22.

By using its internal software timer 22a, the NAD processor 22 drives itself and the RF module (not shown) for a predetermined time (e.g., one minute) so that the telematics terminal operates in a reception standby state, and drives only the cores of the NAD processor 22 and the RF module (not shown) for a predetermined time (e.g., nine minutes) so that the telematics terminal operates in a power saving mode. Namely, the telematics terminal can decrease the amount of current consumed by the control unit 21.

If the telematics terminal is located in an analog service region where time information cannot be obtained from a base station, the telematics terminal receives GPS time information transmitted from a satellite through a GPS (global positioning system) provided in the telematics terminal to thereby drive the software timer 22a.

Unlike the related art, in the first embodiment of the present invention, the control unit 21 is not driven. That is, only the NAD processor 22 and the RF module (not shown) are driven in a reception standby state for one minute, and only the cores of the NAD processor 22 and the RF module (not shown) are driven in a power saving mode for nine minutes, thereby reducing a current which would otherwise be consumed by the control unit 21 as in the related art.

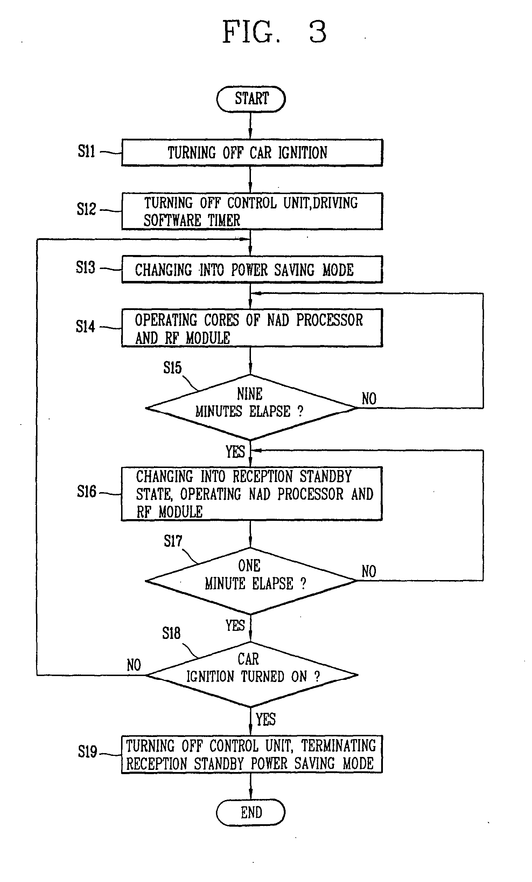

Figure 3 is a flow chart showing a method for implementing a power saving mode of a telematics terminal shown in Figure 2.

The operation of the apparatus for implementing a power saving mode of the telematics terminal will now be explained with reference to Figure 3.

When the ignition of a car is turned off (S11), the control unit 21 is completely turned off, the software timer 22a in the NAD processor operates on the basis of the time information received from a CDMA/PCS base station (not shown) (S12). Here, the software timer 22a operates the clock oscillator 27 separately attached to an external part of the NAD processor 22.

As the software timer 22a operates, a mode of the telematics terminal is changed into a power saving mode (S13) so that only the cores of the NAD processor 22 and the RF module (not shown) are driven (S14). If the power saving mode lasts longer than nine minutes (S15), the mode of the telematics terminal is changed into a reception standby state (S16), so that the NAD processor 22 and the RF module (not shown) operate normally. If the reception standby state lasts longer than one minute (S17), it is checked whether the ignition of a car is turned on (S18). If the ignition is turned off, the mode of the telematics terminal is changed to the power saving mode again (S13). However, if the ignition of the car is turned on, the reception standby power saving mode of the telematics terminal is terminated, and the power unit 21 is turned on (S19). Here, it can be understood that the particular time durations may be set differently as desired.

Namely, the telematics terminal according to the present invention can prevent the current consumption used to operate the control unit 1 in a reception standby state in the related art. This is because the control unit 21 is completely turned off after the ignition of the car is turned off, and only the NAD processor 22 and the RF module (not shown) are periodically turned on to receive signals from the base station according to the present invention.

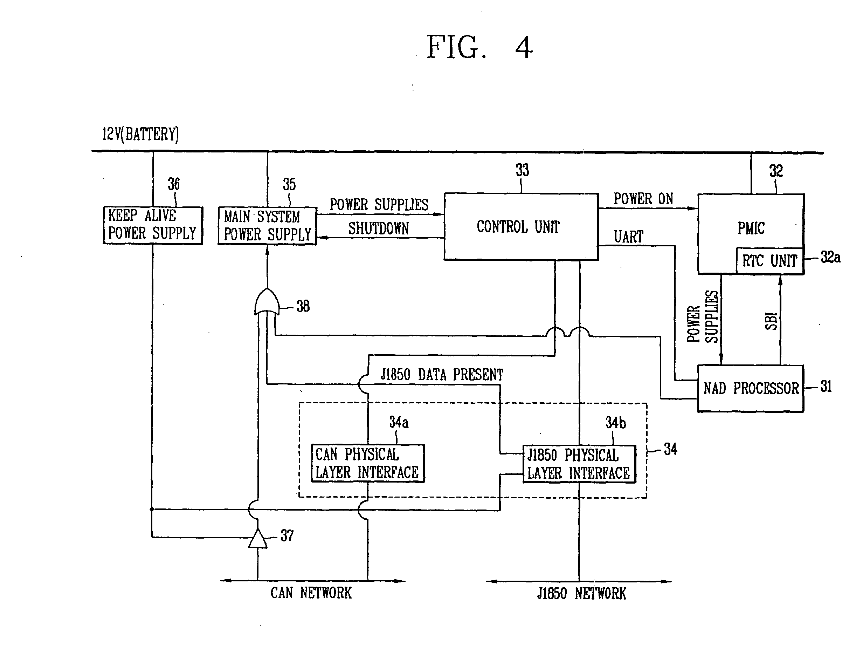

Figure 4 is a block diagram showing a second embodiment of an apparatus for implementing a power saving mode of a telematics terminal according to the present invention.

As shown in Figure 4, the apparatus for implementing a power saving mode includes a real time clock (RTC) unit 32a provided in a PMIC 32, which supplies power to an NAD processor 31, for generating a real-time clock; an NAD processor 31 for periodically changing a mode of the telematics terminal into a reception standby state or a power saving mode on the basis of the real-time information received from the RTC unit 32a; a control unit 33 communicating with the control unit (not shown) within a car and with the NAD processor 31 to control the telematics terminal; a communication interface unit 34 for allowing communication between the control unit 33 and another control unit (not shown) in the car; a main system power supply unit 35 for supplying power to a main system including the control unit 33; a keep alive power supply unit 36 for supplying power to the communication interface unit 34 and an amplifier 37 for a communication signal; and a signal combination unit 38 for combining a signal applied from the communication interface unit 34 with a power control signal applied from the NAD processor 31 to control the main system power supply unit 35.

As in the related art, the communication interface unit 34 of the present invention can include a CAN (controller area network) physical layer interface 34a and a J1850 physical layer interface 34b, and the control unit 33 is turned off in the reception standby state or the power saving mode so that it does not operate.

The PMIC 32 can be an integrated circuit having therein a plurality of regulators, which can supply power to each block such as the NAD processor 31 and the RF module (not shown) and to control such supply, and having a control circuit for the regulators. Most PMICs 32 have a real-time clock (RTC) function. Here, the PMIC 32 drives an RTC unit 32a (provided therein), using the time information received from the NAD processor 31 and a clock oscillator (not shown) attached to an external part of the PMIC 32.

The operation of the apparatus for implementing a power saving mode of the telematics terminal constructed as described above will now be explained briefly.

When the ignition of a car having the telematics terminal therein turned off, the control unit 33 is completely turned off, and the NAD processor 31 transmits the time information received from the base station (not shown) to the PMIC 32. The PMIC 32 having received the time information presets the RTC unit 32a provided therein, and a mode of the internal devices (except the RTC unit 32a) is changed into a power saving mode.

The RTC unit 32a transmits real-time information to the NAD processor 31, periodically, and the NAD processor 31 which has received the real-time information operates the PMIC 32, the RF module (not shown) and the NAD processor 31 in a reception standby state for one minute. Then, the RTC unit 32a operates only the cores of the PMIC 32, the RF module (not shown) and the NAD processor 31 in a power saving mode for nine minutes. Here, it can be understood that the particular time durations may be set differently as desired.

If the telematics terminal is located in an analog service region where time information can not be received from a base station (not shown), the telematics terminal receives GPS time information transmitted from a satellite through a GPS module (not shown) provided therein and transmits the received information to the PMIC 32. The RTC unit 32a provided in the PMIC 32 is driven on the basis of the GPS time information.

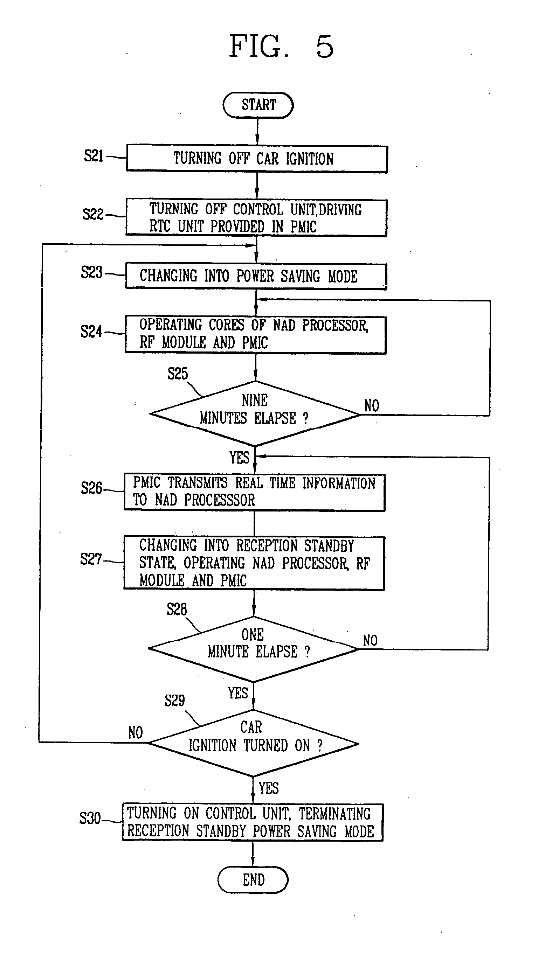

Figure 5 is a flow chart showing a method for implementing a power saving mode of a telematics terminal shown in Figure 4.

The operation of the apparatus for implementing a power saving mode of the telematics terminal will now be explained in detail.

When the ignition of the car is turned off (S21), the control unit 33 is completely turned off, the time information received from the base station (not shown) is transmitted to the PMIC 32 through the NAD processor 31, and the RTC unit 32a provided in the PMIC 32 is driven according to the time information (S22). Here, the RTC unit 32a is operated by the clock oscillator (not shown) separately attached to an external part of the PMIC 32.

If the RTC unit 32a is operated, a mode of the telematics terminal is changed into a power saving mode (S23) so that only the cores of the NAD processor 31, the RF module (not shown) and the PMIC 32 are driven (S24). If the power saving mode lasts longer than nine minutes (S25), the PMIC 32 transmits real-time information to the NAD processor 31 (S26), and the NAD processor 31, which has received the real-time information, is turned on, so that the mode of the RF module (not shown) and the PMIC 32 is changed into a reception standby state (S27).

If the reception standby state lasts longer than one minute (S28), it is checked whether the ignition of the car is turned on (S29). If the ignition is turned off, the reception standby state is changed into a power saving mode (S23). However, if the ignition of the car is turned on, the reception standby power saving mode of the telematics terminal is terminated, and the control unit 33 is turned on (S30).

As so far described, the apparatus and method for implementing a power saving mode of the telematics terminal according to the present invention is advantageous in that the current consumption used to operate the control unit 33 in the reception standby state in the related art can be prevented. This is because, when the ignition of the car is turned off, the control unit 33 is completely turned off, and only the NAD processor 31 and the RF module (not shown) are turned on periodically to receive signals from the base station.

In addition, in the apparatus and method for implementing a power saving mode of the telematics terminal according to the present invention, a power saving function in a reception standby state is improved, thereby minimizing battery consumption of the telematics terminal and extending its life.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. An apparatus for implementing a power saving mode of a telematics terminal which is provided in a transportation means (vehicle), exchanges various radio (wireless) data with a base station while the transporation means is moving and changes a mode of the telematics terminal into a reception standby power saving mode when the ignition of the transportation means is turned off, comprising:
a control unit turned off in the reception standby power saving mode;
a modem for mobile communication for receiving time information from the base station and periodically operating in a reception standby state or a power saving mode according to real-time information;
a clock oscillator for driving a timer which calculates real-time information; and a signal combining unit for combining a signal applied from a communication interface unit with a power control signal applied from the modem for mobile communication to control a main system power supply unit.

2. The apparatus of claim 1, wherein the reception standby power saving mode comprises:
a reception standby state in which a signal received from a base station is searched for a first time duration;
a power saving mode in which a signal of the base station is not searched for a second time duration.

3. The apparatus of claim 1, wherein the timer is provided in the modem for mobile communication or in a modem for mobile communication power supply unit.

4. An apparatus for implementing a power saving mode of a telematics terminal comprising:
a control unit for controlling a telematics terminal provided in a transportation means and maintaining a power state that is the same as a power state of the transportation means;
a modem for mobile communication having a software timer therein, for receiving time information from a base station;
a clock oscillator provided with the modem for mobile communication, for driving the software timer;
a communication interface unit for allowing communication with another control unit in the transportation means; and
a signal combining unit for combining a signal applied from the communication interface unit with a power control signal applied from the modem for mobile communication to control a main system power supply unit.

5. The apparatus of claim 4, further comprising:
a power supply unit for supplying power to the modem for mobile communication; and
a keep alive power supply unit for supplying power to the communication interface unit and an amplifier for a communication signal.

6. The apparatus of claim 4, wherein the control unit is turned off when the ignition of the transportation means is turned off.

7. The apparatus of claim 4, wherein the main system power supply unit supplies power to the control unit.

8. The apparatus of claim 4, wherein the modem for mobile communication periodically changes a mode of the telematics terminal into a reception standby state or a power saving mode according to time information of the software timer.

9. The apparatus of claim 8, wherein, in the reception standby state, only the modem for mobile communication and an RF module are driven for a first time duration to receive a signal from the base station.

10. The apparatus of claim 8, wherein, in the power saving mode, only the cores of the modem for mobile communication and the RF module are driven for a second time duration.

11. An apparatus for implementing a power saving mode of a telematics terminal comprising:
a control unit for controlling a telematics terminal and maintaining a power state that is the same as a power state of a transportation means;
a modem for mobile communication for receiving time information from a base station and periodically changing a mode of the telematics terminal into a reception standby state or a power saving mode;
a modem for mobile communication power supply unit having therein an RTC unit which generates a real-time clock, for periodically transmitting real time information of the RTC unit to the modem for mobile communication;
a communication interface unit for allowing communication with another control unit in the transportation means; and
a signal combining unit for combining a signal applied from the communication interface unit and a power control signal applied from the modem for mobile communication to control a main system power supply unit.

12. The apparatus of claim 11, further comprising a keep alive power supply unit for supplying power to the communication interface unit and an amplifier for a communication signal.

13. The apparatus of claim 11, wherein the control unit is turned off when the ignition of the transportation means is turned off.

14. The apparatus of claim 11, wherein the main system power supply unit applies power to the control unit.

15. The apparatus of claim 11, wherein the modem for mobile communication changes a mode of itself, the modem for mobile communication power supply unit and an RF module into a reception standby state or a power saving mode according to real time information transmitted from the modem for mobile communication power supply unit.

16. The apparatus of claim 15, wherein, in the reception standby state, only the modem for mobile communication, the modem for mobile communication power supply unit and the RF module are driven for a first time duration to receive a signal from the base station.

17. The apparatus of claim 15, wherein, in the power saving mode, only the cores of the modem for mobile communication, the modem for mobile communication power supply unit and the RF module are driven for a second time duration.

18. A method for implementing a power saving mode of a telematics terminal comprising:
turning off a control unit when a telematics terminal is turned off, and driving a timer upon receiving time information from a base station; and
changing a mode of the telematics terminal into a reception standby state or a power saving mode at predetermined intervals.

19. The method of claim 18, wherein the timer is provided in a modem for mobile communication or in a modem for mobile communication power supply unit.

20. A method for implementing a power saving mode of a telematics terminal comprising:
turning off a control unit when a telematics terminal is turned off;
operating a software timer, which is provided in a modem for mobile communication, on the basis of time information received from a base station;
maintaining a power saving mode for a first time duration; and
maintaining a reception standby state for a second time duration.

21. The method of claim 20, further comprising periodically changing a mode of the telematics terminal into the power saving mode or the reception standby state until the telematics terminal is turned on.

22. The method of claim 20, wherein, in the step of maintaining the power saving mode, only the cores of the modem for mobile communication and an RF module are driven.

23. The method of claim 20, wherein, in the step of maintaining the reception standby state, the modem for mobile communication and an RF module are driven to receive a signal from the base station.

24. A method for implementing a power saving mode of a telematics terminal comprising:
a step in which a control unit is turned off when a telematics terminal is turned off;
a step in which a modem for mobile communication having received time information from a base station transmits the time information to a modem for mobile communication power supply unit;
a step in which the modem for mobile communication power supply unit drives an RTC unit provided therein; and
a step in which the modem for mobile communication changes a mode of the telematics terminal into a power saving mode or a reception standby state according to real time information periodically transmitted from the RTC unit.

25. The method of claim 24, further comprising a step in which a mode of the telematics terminal is periodically changed into the power saving mode and the reception standby state until the telematics terminal is turned on.

26. The method of claim 24, wherein the step of changing the mode of the telematics terminal into the power saving mode or the reception standby state comprises:
maintaining the power saving mode for a first time duration; and
maintaining the reception standby state for a second time duration.

27. The method of claim 26, wherein, in the step of maintaining the power saving mode, only the cores of the modem for mobile communication, a modem for mobile communication power supply unit and an RF module are driven.

28. The method of claim 26, wherein, in the step of maintaining the reception standby state, the modem for mobile communication, a modem for mobile communication power supply unit and an RF module are driven to receive a signal from the base station.
